# EUROPEAN PATENT APPLICATION

(11) **EP 2 163 425 A1**
(43) Date of publication of application: **17.03.2010**
(21) Application number: 09011584.1
(22) Date of filing: 10.09.2009
(51) Int. Cl.: B60N 2/427, B60N 2/44, B60N 2/62, B60N 2/16

(54) **Seat assembly with cushion tilt**

(30) Priority: 12.09.2008 US 96334 P
(71) Applicant: USSC Group, LLC, Exton PA 19341 (US)
(72) Inventor: Hammasrskjold, Christian, U., Devon, PA 19333 (US); Gross, Matthew, C., Pottstown, PA 19464 (US); Galle, Vincent, P., Schwenksville, PA 19473 (US); Rains, Luke, B., Conshohocken, PA 19428 (US); Mort, Jason, Pottstown, PA 19464 (US)
(74) Representative: Waller, Stephen

(57) **Abstract**

A seat assembly comprises a seat back pivotably connected to a seat base (14), a tilt pan (20) pivotably connected to the seat base (14), pivotable over a travel range between a lower position and a raised position, and a biasing device (25) positioned between the tilt pan (20) and the seat base (14), wherein the biasing device (25) applies a biasing force to the tilt pan (20), biasing the tilt pan (20) toward the raised position.

## Description

### RELATED APPLICATION

This application claims priority benefit of U.S. provisional patent application No. 61/096,334 filed on September 12, 2008.

### FIELD OF THE INVENTION

This invention relates to improvements in seat assemblies, and more particularly to seat assemblies with tiltable components, providing what is sometimes referred to as adjustable seat rake.

### BACKGROUND OF THE INVENTION

Adjustable seat assemblies take on a variety of shapes and sizes depending upon the intended application. Some adjustable seat assemblies have pivotable portions allowing for comfort adjustment for a range of different occupants of the area of the seat assembly near the femur. Such adjustable seat assemblies can be particularly desirable where the occupant has to drive for extended periods, such as a bus or other mass transit driver.

U.S. Patent 4,455,047 to Watanabe discloses a vehicle seat having an adjustable femur supporter comprising a curved plate which biases a front of a seat base and which is adjustable to one of a series of several discrete positions with the help of a rotatable cam. However, Watanabe uses a cam which limits adjustment to discrete positions, and in general focuses more on aesthetics of the front edge of the seat base rather than on comfort of the occupant. It would be desirable to provide an adjustable seat assembly which can be infinitely adjustable over a wide range of positions, which acts to provide active suspension for the upper leg by providing adjustable resistance to the thigh, and which can return to a predetermined position.

### SUMMARY OF THE INVENTION

In accordance with the present invention, there is provided a seat assembly comprises a seat back pivotably connected to a seat base, a tilt pan pivotably connected to the seat base, pivotable over a travel range between a lower position and a raised position, and a biasing device positioned between the tilt pan and the seat base, wherein the biasing device applies a biasing force to the tilt pan, biasing the tilt pan toward the raised position. The biasing device may comprise, for example, an inflatable air bag or an air spring.

From the foregoing disclosure and the following more detailed description of various preferred embodiments it will be apparent to those skilled in the art that the present invention provides a significant advance in the technology of seat assemblies. Particularly significant in this regard is the potential the invention affords for providing a high quality, low cost, easy to adjust and easy to use seat assembly. Additional features and advantages of various preferred embodiments will be better understood in view of the detailed description provided below.

### BRIEF DESCRIPTION OF THE DRAWINGS

Fig. 1 is a partially exploded isometric view of a seat assembly with a cushion tilt in accordance with one embodiment.

Fig. 2 is an isometric view of the seat assembly with a cushion tilt of Fig. 1 with a hinged tilt pan shown in a lowered position.

Fig. 3 is an isometric view of the seat assembly with a cushion tilt of Fig. 1 with a hinged tilt pan shown in a raised position.

Fig. 4 is a side view of the seat assembly of Fig. 1 shown in the lowered position.

Fig. 5 is a side view of the seat assembly of Fig. 1 shown in the raised position.

It should be understood that the appended drawings are not necessarily to scale, presenting a somewhat simplified representation of various preferred features illustrative of the basic principles of the invention. The specific design features of the seat assembly as disclosed here, including, for example, the specific range of cushion tilt, will be determined in part by the particular intended application and use environment. Certain features of the illustrated embodiments have been enlarged or distorted relative to others to improve visualization and clear understanding. In particular, thin features may be thickened, for example, for clarity of illustration. All references to direction and position, unless otherwise indicated, refer to the orientation illustrated in the drawings.

### DETAILED DESCRIPTION OF CERTAIN PREFERRED EMBODIMENTS

It will be apparent to those skilled in the art, that is, to those who have knowledge or experience in this area of technology, that many uses and design variations are possible for the seat assembly disclosed here. The following detailed discussion of various alternative and preferred features and embodiments will illustrate the general principles of the invention with reference to a seat assembly suitable for use in a motorized vehicle. Other embodiments suitable for other applications will be apparent to those skilled in the art given the benefit of this disclosure.

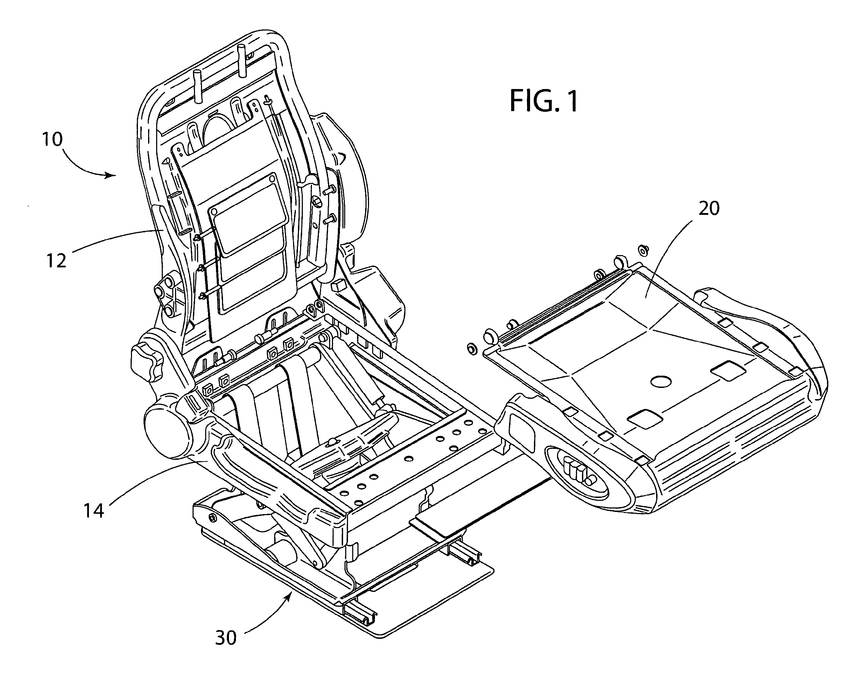

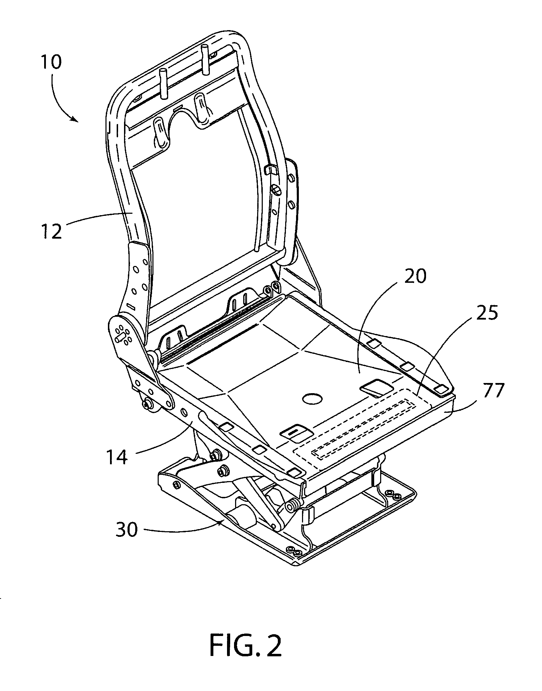

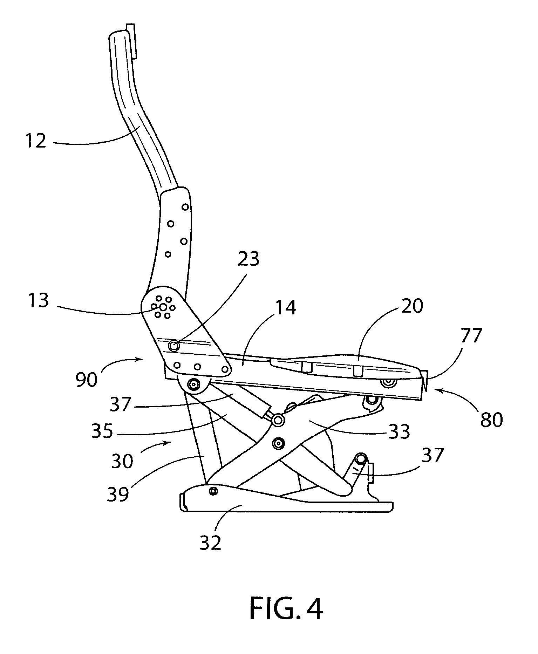

Referring now to the drawings, Fig. 1 shows a partially exploded isometric view of a seat assembly 10 with cushion tilt in accordance with one embodiment where the seat assembly is attachable to a floor or other suitable fixture by a seat suspension 30. The seat assembly 10 comprises a seat back 12, typically pivotably connected to a seat base 14, a tilt pan 20 pivotably connected to the seat base 14, pivotable between a lower position and a raised position. The seat back may be pivotably adjustable with respect to the seat back by use of a manual adjustment mechanism or a motor driven system, for example. Figs. 2 and 4 show the tilt pan 20 in the lower position, or what is essentially a standard seat profile. The seat back 12 is pivotable with respect to the seat base about a first pivot axis 13. A biasing device such as air bag 25 is positioned between the tilt pan 20 and the seat base 14. The biasing device biases the tilt pan away from the seat base. The air bag 25 is inflatable, and inflation of the air bag biases the tilt pan over a travel range from the lower position to the raised position. Foam and fabric would be attached to the tilt pan so that movement of the tilt pan in response to the biasing force of the biasing device moves the foam and fabric.

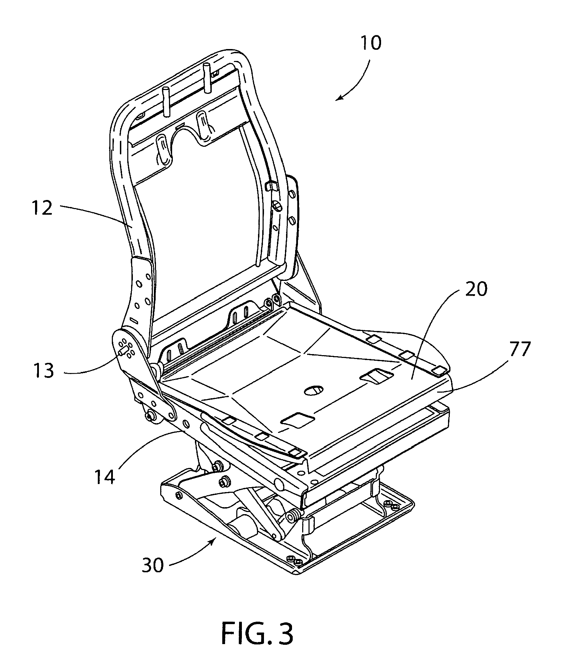

Fig. 3 shows the tilt pan 20 is a raised position. Generally, the angle of tilt of the tilt pan is defined at lower position by the limitation of engaging the seat base, and at the raised position by full inflation of the air bag. The air bag can be partially inflated as well, and this advantageously provides for so-called infinite adjustment of the tilt pan over its travel range to any one of many discrete positions, depending on the choice of the seat occupant. An infinitely adjustable tilt pan would have more than just a few intermediate positions which could be selected along its travel path. Alternatively, the biasing device may comprise an air spring positioned between the tilt pan and the seat base. Addition of air to the air spring biases the tilt pan toward the raised position.

The tilt pan 20 can be provided with a downwardly extending flange 77 as shown in Fig. 3. The purpose of the flange 77 is to both protect the air bag and enhance structural rigidity of the tilt pan 20. Fig. 4 shows that the seat base has a front 80 and a back 90. As shown, the downwardly extending flange 77 extends in front of the front 80 of the seat base. The tilt pan 20 is shown between the seat back and seat base. That is, the tilt pan is positioned on top of the seat base (as shown in the drawings) such that if the seat back folded completely forward the seat back would contact the tilt pan. Foam and fabric (not shown) covers the seat base, back and tilt pan. Such foam and fabric would be attached to the seat back, seat base and the tilt pan as well, as needed to secure the foam and fabric to the rest of the seat assembly. Adjustment of the tilt pan by inflation of the air bag moves such foam and fabric from a position to another position for comfort adjustment of the seat occupant.

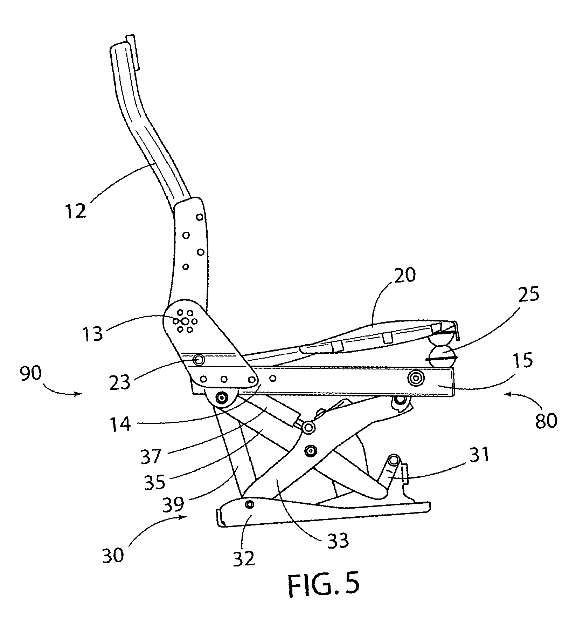

As best shown in Figs. 4-5, the seat suspension 30 comprises a plurality of linkages 31, 33, 35, 39 which move the seat back 12 and seat base 14 together. At least one driving element 37 may be provided to move the pivotably interconnected linkages, which in turn moves the seat base (which in turn moves the seat back with the seat base). As shown, the seat assembly 10 is at least adjustable in a vertical direction (that is, with respect to the floor or other element the seat assembly). Forward, rearward and tilting adjustments are also readily achievable.

As noted above, the seat back is pivotable with respect to the seat base about a first pivot axis 13. The tilt pan 20 is pivotable with respect to the seat base 14 about a second pivot axis 23. Preferably the first pivot axis 13 is separate from the second pivot axis 23. Also, the second pivot axis can be positioned closer to the back 90 than the front 80. See Figs. 4-5. Moving the second pivot axis to a position near the back increases the range of tilt travel at the front between the lower position and the raised position.

Inflation of the air bag lifts the tilt pan 20, in effect adjusting a tilt or angle of the cushion positioned above the tilt pan for occupant comfort. Optionally, as noted above, an air spring can be provided instead of an air bag which compresses as load is transferred to the tilt pan, and recovers as the tilt pan returns to the lowered position.

Advantageously, the present invention provides the seat occupant with active suspension, in the sense that as the weight of the occupant pushes down on the seat assembly, the tilt pan will flex somewhat providing constant support of the occupant's thigh. This seat rake adjustment may be controlled with a remotely located switch to accommodate vehicle design constraints or space limitations, such as limited room between the side of the seat and a door panel, for example.

From the foregoing disclosure and detailed description of certain preferred embodiments, it will be apparent that various modifications, additions and other alternative embodiments are possible without departing from the scope of the invention as defined by the appended claims. The embodiments discussed were chosen and described to provide the best illustration of the principles of the invention and its practical application to thereby enable one of ordinary skill in the art to use the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. A seat assembly comprising, in combination:
a seat back pivotably connected to a seat base;
a tilt pan pivotably connected to the seat base, pivotable over a travel range between a lower position and a raised position; and
a biasing device positioned between the tilt pan and the seat base, wherein the biasing device applies a biasing force to the tilt pan, biasing the tilt pan toward the raised position.

2. The seat assembly of claim 1 wherein the biasing device comprises an air bag positioned between the tilt pan and the seat base, wherein the air bag is inflatable, and inflation of the air bag biases the tilt pan from the lower position to the raised position.

3. The seat assembly of claim 1 or claim 2 wherein the tilt pan is positioned between the seat back and the seat base.

4. The seat assembly of claim 2 further comprising foam and fabric positioned on the seat assembly, covering the seat back, seat base and tilt pan, and inflation of the air bag adjusts a position of the foam and fabric.

5. The seat assembly of any preceding claim further comprising a seat suspension affixed to the seat base.

6. The seat assembly of claim 5 wherein the seat suspension comprises a plurality of linkages which move the seat back and seat base together.

7. The seat assembly of any preceding claim wherein the seat back is pivotable with respect to the seat base about a first pivot axis, and the tilt pan is pivotable with respect to the seat base about a second pivot axis.

8. The seat assembly of claim 7 wherein the first pivot axis is separate from the second pivot axis.

9. The seat assembly of claim 7 or claim 8 wherein the seat base has a front and a back, and the second pivot axis is positioned closer to the back than the front.

10. The seat assembly of any preceding claim wherein the seat base has a front and a back, the tilt pan has a downwardly extending flange which extends in front of the front of the seat base.

11. The seat assembly of any preceding claim wherein the tilt pan is infinitely adjustable over the travel range.

12. The seat assembly of claim 1 wherein the biasing device comprises an air spring.
